# EUROPEAN PATENT APPLICATION

(11) **EP 4 790 469 A1**
(43) Date of publication of application: **12.08.2026**
(21) Application number: 24878480.3
(22) Date of filing: 27.05.2024
(51) Int. Cl.: G02B 13/00, G03B 21/00

(54) **LENS, DISPLAY MODULE, VEHICLE LAMP DEVICE, ELECTRONIC APPARATUS, AND VEHICLE**

(30) Priority: 19.10.2023 CN 202311365955
(71) Applicant: Yinwang Intelligent Technologies Co., Ltd., Shenzhen, Guangdong 518110 (CN)
(72) Inventor: MA, Ming, Shenzhen, Guangdong 518129 (CN); CHEN, Yanzhe, Shenzhen, Guangdong 518129 (CN); LUO, Lushuang, Shenzhen, Guangdong 518129 (CN)
(74) Representative: Gill Jennings & Every LLP
(86) International application number: PCT/CN2024/095581
(87) International publication number: WO 2025/081827

(57) **Abstract**

A lens (310), a display module (300), a vehicle light apparatus (100), an electronic device, and a transportation means are provided. The lens (310) includes at least five lens elements (11 to 15) arranged in an optical axis direction (X) from an image side to an object side. At least three of the at least five lens elements (11 to 15) have positive focal power, and at least one of the at least five lens elements (11 to 15) has negative focal power. When there is one lens element having negative focal power in the lens (310), the lens element having negative focal power is disposed, in the optical axis direction (X), between a lens element closest to the image side in the lens (310) and a lens element closest to the object side in the lens (310). The lens (310) can have features of both a large aperture and a wide field of view, to meet a use requirement.

## Description

This application claims priority to Chinese Patent Application No. 202311365955.2, filed with the China National Intellectual Property Administration on October 19, 2023 and entitled "LENS, DISPLAY MODULE, VEHICLE LIGHT APPARATUS, ELECTRONIC DEVICE, AND TRANSPORTATION MEANS", which is incorporated herein by reference in its entirety.

### TECHNICAL FIELD

Embodiments of this application relate to the field of lens technologies, and in particular, to a lens, a display module, a vehicle light apparatus, an electronic device, and a transportation means.

### BACKGROUND

With development of intelligent vehicle technologies, vehicle-mounted headlights are required to have both conventional lighting and pattern projection functions to meet increasing requirements in areas such as guest reception, information interaction, and autonomous driving. Therefore, to meet the increasing requirements, optical requirements on vehicle lights that can project patterns are stricter. For example, the vehicle light is required to have a wide field of view (field of view, FOV) available for projection. The field of view may be used as one of important indicators for reflecting an amount of projected information. A wider field of view indicates a larger amount of information that can be projected. However, existing lenses used in the vehicle lights cannot have both a large aperture and a wide field of view.

### SUMMARY

Embodiments of this application provide a lens, a display module, a vehicle light apparatus, an electronic device, and a transportation means, so that the lens can have both a large aperture and a wide field of view.

A first aspect of this application provides a lens, including at least five lens elements arranged in an optical axis direction from an image side to an object side. At least three of the at least five lens elements have positive focal power, and at least one of the at least five lens elements has negative focal power. When there is one lens element having negative focal power in the lens, the lens element having negative focal power is disposed, in the optical axis direction, between a lens element closest to the image side in the lens and a lens element closest to the object side in the lens.

The lens provided in this embodiment of this application includes the at least five lens elements. The at least three of the at least five lens elements have positive focal power, and the at least one of the at least five lens elements has negative focal power, so that the lens can have features of both a large aperture and a wide field of view. When there is one lens element having negative focal power in the lens, the lens element having negative focal power is disposed between the lens element closest to the image side in the lens and the lens element closest to the object side in the lens, so that it can be ensured that the lens has features of both a large aperture and a wide field of view. In addition, when there are at least two lens elements having negative focal power in the lens, and the lens element closest to the object side and/or the lens element closest to the image side in the lens have/has negative focal power, the lens may also have features of both a large aperture and a wide field of view.

In a possible implementation, the lens satisfies a relational expression: 33 mm<EFL<38 mm, where EFL indicates a focal length of the lens.

The focal length of the lens provided in this embodiment of this application is greater than 33 mm and less than 38 mm, so that a field of view greater than 20°x10° can be implemented on a premise of implementing a large aperture, where 20° is a field of view of the lens in a horizontal direction, and 10° is a field of view of the lens in a vertical direction.

In a possible implementation, the lens satisfies a relational expression: 1.7<R1/EFL<5.72, where R1 indicates a curvature radius of an image-side surface of the lens element closest to the image side in the optical axis direction in the lens.

The lens provided in this embodiment of this application satisfies the relational expression: 1.7<R1/EFL<5.72, so that manufacturing difficulty of the lens element closest to the image side in the lens can be reduced and a yield rate can be improved on a premise that both a large aperture and a wide field of view are implemented. This helps improve economy, and can further facilitate aberration correction. In addition, the image-side surface of the lens element closest to the image side in the lens can be further prevented from being excessively protruding or excessively flat. That the image-side surface of the lens element closest to the image side is excessively protruding may cause interference between the lens element and another element, and that the image-side surface of the lens element closest to the image side is excessively flat may affect a shape of a vehicle light.

In a possible implementation, the lens satisfies a relational expression: 64.5 mm<R1<200 mm, where R1 indicates the curvature radius of the image-side surface of the lens element closest to the image side in the optical axis direction in the lens.

The lens provided in this embodiment of this application satisfies the relational expression: 64.5 mm<R1<200 mm, so that manufacturing difficulty of the lens element closest to the image side in the lens can also be reduced and the yield rate can also be improved on the premise that both a large aperture and a wide field of view are implemented. This helps improve economy, and can further facilitate aberration correction. In addition, the image-side surface of the lens element closest to the image side in the lens can be further prevented from being excessively protruding or excessively flat.

In a possible implementation, the lens satisfies a relational expression: - 23<R2/EFL<11.2, where R2 indicates a curvature radius of an object-side surface of the lens element closest to the object side in the optical axis direction in the lens.

The lens provided in this embodiment of this application satisfies the relational expression: -23<R2/EFL<11.2, so that manufacturing difficulty of the lens element closest to the object side in the lens can be reduced and a yield rate can be improved on the premise that both a large aperture and a wide field of view are implemented. This helps improve economy. In addition, the object-side surface of the lens element closest to the object side in the lens can be further prevented from being excessively protruding or excessively concave. That the object-side surface of the lens element closest to the object side is excessively protruding may cause interference between the lens element and another optical element, or cause compression of optical space between the lens and a projection chip, or cause damage to a lens element close to the object side. That the object-side surface of the lens element closest to the object side is excessively concave is not conducive to aberration correction.

In a possible implementation, the lens satisfies a relational expression: -860 mm<R2<385 mm, where R2 indicates the curvature radius of the object-side surface of the lens element closest to the object side in the optical axis direction in the lens.

The lens provided in this embodiment of this application satisfies the relational expression: -860 mm<R2<385 mm, so that manufacturing difficulty of the lens element closest to the object side in the lens can also be reduced and the yield rate can also be improved on the premise that both a large aperture and a wide field of view are implemented. This helps improve economy. In addition, the object-side surface of the lens element closest to the object side in the lens can also be prevented from being excessively protruding or excessively concave.

In a possible implementation, the lens satisfies a relational expression: 0.9<BFL/EFL<1.15, where BFL indicates a back focal length of the lens.

The lens provided in this embodiment of this application satisfies the relational expression: 0.9<BFL/EFL<1.15, so that an optical path of the lens can be prevented from being excessively long or excessively short. That the optical path of the lens is excessively long is not conducive to design. That the optical path of the lens is excessively short is not conducive to setting of a back-end optical path.

In a possible implementation, the lens element closest to the image side in the lens has positive focal power in the optical axis direction.

In the lens provided in this embodiment of this application, the lens element closest to the image side in the lens is set to be a lens element having positive focal power, which can help improve economy of the lens on the premise that both a large aperture and a wide field of view are implemented.

In a possible implementation, the lens element closest to the object side in the lens has positive focal power in the optical axis direction.

In the lens provided in this embodiment of this application, the lens element closest to the object side in the lens is set to be a lens element having positive focal power, so that an amount of light entering the lens can be increased, to improve optical performance. In addition, economy of the lens can be further improved.

In a possible implementation, at least one lens element is a spherical lens element.

A larger quantity of spherical lens element used in the lens provided in this embodiment of this application indicates a larger extent to which processing difficulty of the lens is reduced. This helps improve the yield rate.

A second aspect of this application provides a display module, including a projection chip and the lens according to any implementation of the first aspect.

In the display module provided in this embodiment of this application, the lens according to the first aspect is used, so that the display module can have both features of a large aperture and a wide field of view, to meet a display requirement.

A third aspect of this application provides a vehicle light apparatus, including a light source and the display module according to the second aspect.

In the vehicle light apparatus provided in this embodiment of this application, the display plane module according to the second aspect is used, so that the vehicle light apparatus has features of both a large aperture and a wide field of view. In this way, a projection range and projection brightness of the vehicle light apparatus can be improved, to meet a use requirement.

A fourth aspect of this application provides an electronic device, including the display module according to the second aspect.

A fifth aspect of this application provides a transportation means, including the display module according to the second aspect or the vehicle light apparatus according to the third aspect.

### BRIEF DESCRIPTION OF DRAWINGS

FIG. 1 is a diagram of a structure of a vehicle light apparatus according to an embodiment of this application;
FIG. 2 is a diagram of a structure of a first display module according to an embodiment of this application;
FIG. 3 is a diagram of spherical chromatic aberration of a lens in FIG. 2;
FIG. 4 is a diagram of astigmatism and field curvature of a lens in FIG. 2;
FIG. 5 is a diagram of distortion of a lens in FIG. 2;
FIG. 6 is a diagram of a structure of a second display module according to an embodiment of this application;
FIG. 7 is a diagram of spherical chromatic aberration of a lens in FIG. 6;
FIG. 8 is a diagram of astigmatism and field curvature of a lens in FIG. 6;
FIG. 9 is a diagram of distortion of a lens in FIG. 6;
FIG. 10 is a diagram of a structure of a third display module according to an embodiment of this application;
FIG. 11 is a diagram of spherical chromatic aberration of a lens in FIG. 10;
FIG. 12 is a diagram of astigmatism and field curvature of a lens in FIG. 10;
FIG. 13 is a diagram of distortion of a lens in FIG. 10;
FIG. 14 is a diagram of a structure of a fourth display module according to an embodiment of this application;
FIG. 15 is a diagram of spherical chromatic aberration of a lens in FIG. 14;
FIG. 16 is a diagram of astigmatism and field curvature of a lens in FIG. 14;
FIG. 17 is a diagram of distortion of a lens in FIG. 14;
FIG. 18 is a diagram of a structure of a fifth display module according to an embodiment of this application;
FIG. 19 is a diagram of spherical chromatic aberration of a lens in FIG. 18;
FIG. 20 is a diagram of astigmatism and field curvature of a lens in FIG. 18;
FIG. 21 is a diagram of distortion of a lens in FIG. 18;
FIG. 22 is a diagram of a structure of a fifth display module according to an embodiment of this application;
FIG. 23 is a diagram of spherical chromatic aberration of a lens in FIG. 22;
FIG. 24 is a diagram of astigmatism and field curvature of a lens in FIG. 22;
FIG. 25 is a diagram of distortion of a lens in FIG. 22;
FIG. 26 is a diagram of a structure of a sixth display module according to an embodiment of this application;
FIG. 27 is a diagram of spherical chromatic aberration of a lens in FIG. 26;
FIG. 28 is a diagram of astigmatism and field curvature of a lens in FIG. 26;
FIG. 29 is a diagram of distortion of a lens in FIG. 26;
FIG. 30 is a diagram of a structure of an eighth display module according to an embodiment of this application;
FIG. 31 is a diagram of spherical chromatic aberration of a lens in FIG. 30;
FIG. 32 is a diagram of astigmatism and field curvature of a lens in FIG. 30; and
FIG. 33 is a diagram of distortion of a lens in FIG. 30.

### Reference numerals:

100: vehicle light apparatus;
200: light source;
300: display module;
310: lens; 320: projection chip;
11: first lens element; 12: second lens element; 13: third lens element; 14: fourth lens element; 15: fifth lens element;
20: cover glass; 30: diaphragm.

### DESCRIPTION OF EMBODIMENTS

Terms used in implementations of this application are merely used to explain specific embodiments of this application, but are not intended to limit this application.

For ease of understanding, related technical terms in embodiments of this application are first explained and described.

A focal length, also referred to as a focal length, is a measurement manner for measuring convergence or divergence of light in an optical system, and means a vertical distance from an optical center of a lens or a lens group to a focal plane when a clear image of an infinite scene is formed on the focal plane through the lens or the lens group.

Image side: With a lens as a boundary, an image side is a side on which an image is located, and a surface that is of a lens element and that faces the image side is an image-side surface of the lens element.

Object side: A side on which a projection chip is located is an object side, and a surface that is of a lens element and that faces the object side is an object-side surface.

A total track length (Total Track Length, TTL for short) is a total length from a vertex of a 1^{st} lens element that is disposed adjacent to an object side in a lens to an image surface of the lens, and is also referred to as a total optical length.

A back focal length (back focal length, BFL for short) is defined as a distance from a lens element closest to an image surface in a lens to a projection chip.

Focal power indicates a capability of a lens element to refract incident parallel light beams.

Positive focal power indicates that a lens element has a positive focal length and has effect of converging light.

Negative focal power indicates that a lens element has a negative focal length and has effect of diverging light.

An aperture is an apparatus configured to control an amount of light passing through a lens and entering an electronic device, and is usually in the lens. A size of the aperture is represented by an F# (F-number) value.

F-number F# is a relative value (a reciprocal of a relative aperture) obtained by dividing a focal length of a lens by a light transmission diameter of the lens. A smaller value of the F-number F# indicates a larger amount of light entering within a same unit of time.

Cover glass (cover glass, CG) is configured to protect a projection chip.

A digital micromirror device (digital micromirror devices, DMD) is configured to reflect light to form an image.

Liquid crystal on silicon (liquid crystal on silicon, LCOS) is configured to reflect light.

Axial chromatic aberration: The axial chromatic aberration is also referred to as a longitudinal chromatic aberration or a positional chromatic aberration. After passing through a lens, a beam of light parallel to an optical axis is converged at different positions. This aberration is referred to as a positional chromatic aberration or an axial chromatic aberration. This is because the lens has different imaging positions for light of various wavelengths. As a result, image surfaces for images of light of different colors cannot completely coincide during final imaging, and dispersion is formed by divergence of polychromatic light.

A distortion (distortion) is a degree at which an image formed by an optical system for an object is distorted relative to the object. A distortion is caused because a height of a point at which chief rays with different fields of view intersect a Gaussian image surface after the chief rays pass through the optical system is not equal to an ideal image height due to impact of a diaphragm aberration, and a difference between the two heights is a distortion. Therefore, a distortion only changes an imaging position of an off-axis object point on an ideal surface, which leads to a distortion of a shape of an image, but does not affect definition of the image.

With development of intelligent vehicle technologies, vehicle-mounted headlights are required to have both conventional lighting and pattern projection functions to meet increasing requirements in areas such as guest reception, information interaction, and autonomous driving. Therefore, to meet the increasing requirements, optical requirements on vehicle lights that can project patterns are stricter. For example, the vehicle light is required to have a wide field of view (field of view, FOV) available for projection. The field of view may be used as one of important indicators for reflecting an amount of projected information. A wider field of view indicates a larger amount of information that can be projected. However, existing lenses used in the vehicle lights cannot have both a large aperture and a wide field of view. Therefore, how to enable a lens to have both a large aperture and a wide field of view becomes an urgent problem to be resolved.

In view of this, embodiments of this application provide a lens 310, a display module 300, a vehicle light apparatus 100, an electronic device, and a transportation means. The lens 310 may have features of both a large aperture and a wide field of view, so that a projection range and projection brightness can be improved, to meet a use requirement.

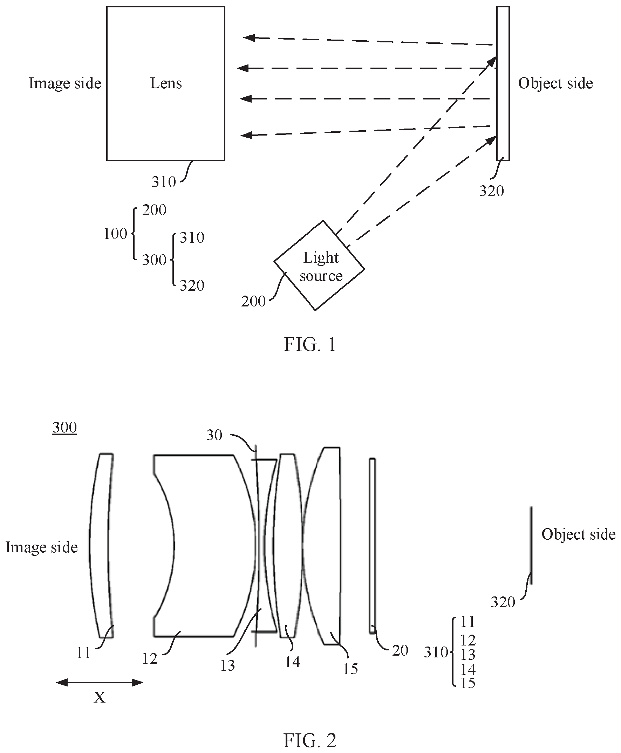

FIG. 1 is a diagram of a structure of a vehicle light apparatus 100 according to an embodiment of this application. Refer to FIG. 1. The vehicle light apparatus 100 in this embodiment of this application includes a light source 200 and a display module 300. The display module 300 includes a projection chip 320 and a lens 310, and the projection chip 320 is disposed on an object side of the lens 310. In a process of using the vehicle light apparatus 100, the light source 200 emits imaging light that can be reflected by the projection chip 320, and the projection chip 320 reflects the imaging light to the lens 310. After passing through the lens 310, the imaging light forms to-be-displayed information on an image side, to meet requirements of guest reception, information interaction, autonomous driving, and the like.

In embodiments of this application, the projection chip 320 may include but is not limited to a digital micromirror device (DMD) or a liquid crystal on silicon (LCOS).

The vehicle light apparatus 100 provided in this embodiment of this application may include but is not limited to a pixel display vehicle light, a near-field guest reception vehicle light, a vehicle light for interaction with pedestrians or other vehicles, or the like.

When the vehicle light apparatus 100 provided in this embodiment of this application is applied to a transportation means, the transportation means may include but is not limited to a vehicle, a ship, an airplane, a train, or the like. The vehicle may include but is not limited to a single-wheeled vehicle, a two-wheeled vehicle, a tricycle, a four-wheeled vehicle, or the like. For example, in embodiments of this application, an example in which the four-wheeled vehicle is the transportation means is used for description.

It should be noted that, when the display module 300 provided in this embodiment of this application is used in the transportation means, in addition to being disposed in the vehicle light apparatus 100, the display module 300 may also be disposed in another part of the transportation means, to display to-be-displayed information. In addition, in some embodiments, the vehicle light apparatus 100 may alternatively not include the display module 300, and the display module 300 is disposed in another part of the transportation means.

It should be further noted that, in addition to being used in the transportation means, the display module 300 provided in this embodiment of this application may also be used in an electronic device. The electronic device may include but is not limited to a device such as a display, a projector, or a head-up display.

The following describes in detail the lens 310 and the display module 300 provided in this embodiment of this application with reference to the accompanying drawings.

FIG. 2 is a diagram of a structure of a first display module 300 according to an embodiment of this application. Refer to FIG. 2. The display module 300 provided in this embodiment of this application includes a projection chip 320 and a lens 310. The projection chip 320 and the lens 310 are spaced apart in an optical axis direction. A side on which the projection chip 320 is located is an object side. In other words, the projection chip 320 is disposed on the object side of the lens 310.

In some possible implementations, still refer to FIG. 2. The display module 300 provided in this embodiment of this application may further include a diaphragm 30, and the diaphragm 30 is disposed between a 2^{nd} lens element and a 3^{rd} lens element of the lens 310 in the optical axis direction from an image side to the object side. Certainly, the diaphragm 30 may alternatively be disposed at another position along an optical axis. For example, in some embodiments, the diaphragm 30 is disposed between a 1^{st} lens element and the 2^{nd} lens element (not shown in the figure) of the lens 310 in the optical axis direction from the image side to the object side. However, when the diaphragm 30 is disposed between the 2^{nd} lens element and the 3^{rd} lens element of the lens 310, economy of the lens 310 can be improved on a premise of ensuring optical performance.

In some possible implementations, still refer to FIG. 2. The display module 300 provided in this embodiment of this application may further include cover glass 20. The cover glass 20 is disposed between the lens 310 and the projection chip 320. The cover glass 20 may protect the projection chip 320.

It should be noted that, in some embodiments, the cover glass 20 (not shown in the figure) may alternatively be removed. Alternatively, in some embodiments, the cover glass 20 may be replaced with a light filter (not shown in the figure) for chromatic aberration correction. Certainly, in some embodiments, the light filter and the cover glass 20 may coexist.

In this embodiment of this application, the lens 310 includes at least five lens elements arranged in the optical axis direction (for example, an X direction in FIG. 2) from the image side to the object side. For example, as shown in FIG. 2, the lens 310 includes a first lens element 11, a second lens element 12, a third lens element 13, a fourth lens element 14, and a fifth lens element 15. Therefore, there are five lens elements. Certainly, there may alternatively be more than five lens elements. At least three of the at least five lens elements have positive focal power, and at least one of the at least five lens elements has negative focal power. In other words, the at least three lens elements in the lens 310 have positive focal power, and the at least one lens element in the lens 310 has negative focal power. For example, as shown in FIG. 2, three of the five lens elements from the first lens element 11 to the fifth lens element 15 have positive focal power, and other two of the five lens elements have negative focal power. When there is one lens element having negative focal power in the lens 310, the lens element having negative focal power is disposed, in the optical axis direction, between a lens element closest to the image side in the lens 310 and a lens element closest to the object side in the lens 310. For example, as shown in FIG. 2, there are five lens elements. In this case, one of the second lens element 12, the third lens element 13, and the fourth lens element 14 in the five lens elements arranged in the optical axis direction from the image side to the object side has negative focal power. When there are at least two lens elements having negative focal power in the lens 310, at least one of the lens element closest to the object side in the lens 310 and the lens element closest to the image side in the lens 310 may have negative focal power, or may not have negative focal power. In other words, when there are at least two lens elements having negative focal power, a position of the lens element having negative focal power is not limited herein.

The lens 310 provided in this embodiment of this application includes the at least five lens elements. The at least three of the at least five lens elements have positive focal power, and the at least one of the at least five lens elements has negative focal power, so that the lens 310 can have features of both a large aperture and a wide field of view. When there is one lens element having negative focal power in the lens 310, the lens element having negative focal power is disposed between the lens element closest to the image side in the lens 310 and the lens element closest to the object side in the lens 310, so that it can be ensured that the lens 310 has features of both a large aperture and a wide field of view. In addition, when there are at least two lens elements having negative focal power in the lens 310, and the at least one of the lens element closest to the object side and the lens element closest to the image side in the lens 310 has negative focal power, the lens 310 may also have features of both a large aperture and a wide field of view.

It should be noted that, in the lens 310 provided in this embodiment of this application, the at least three of the at least five lens elements have positive focal power, and the at least one of the at least five lens elements has negative focal power, so that the lens 310 can have a large aperture. In this case, an F-number Fno≤1.4. A specific value of the F-number is not limited herein. For example, Fno may include but is not limited to 1.38, 1.378, 1.37, 1.36, 1.35, or the like.

In some possible implementations, the lens 310 may further satisfy a relational expression: 33 mm<EFL<38 mm, where EFL indicates a focal length of the lens 310.

Correspondingly, the focal length of the lens 310 provided in this embodiment of this application is greater than 33 mm and less than 38 mm, so that a field of view greater than 20°x10° can be implemented on a premise of implementing a large aperture, where 20° is a field of view of the lens 310 in a horizontal direction, and 10° is a field of view of the lens 310 in a vertical direction.

In this embodiment of this application, a specific value of the focal length of the lens 310 is not limited herein, for example, may include but is not limited to 33.5 mm, 33.88 mm, 33.9 mm, 34 mm, 34.5 mm, 35 mm, 35.3 mm, 36 mm, 37 mm, 37.5 mm, or the like.

In some possible implementations, the lens 310 may further satisfy a relational expression: 1.7<R1/EFL<5.72, where R1 indicates a curvature radius of an image-side surface of the lens element closest to the image side in the optical axis direction in the lens 310.

Correspondingly, the lens 310 provided in this embodiment of this application satisfies the relational expression: 1.7<R1/EFL<5.72, so that manufacturing difficulty of the lens element closest to the image side in the lens 310 can be reduced and a yield rate can be improved on a premise that both a large aperture and a wide field of view are implemented. This helps improve economy, and can further facilitate aberration correction. In addition, the image-side surface of the lens element closest to the image side in the lens 310 can be further prevented from being excessively protruding or excessively flat. That the image-side surface of the lens element closest to the image side is excessively protruding may cause interference between the lens element and another element, and that the image-side surface of the lens element closest to the image side is excessively flat may affect a shape of a vehicle light.

In this embodiment of this application, a specific ratio of R1/EFL is not limited herein, for example, may include but is not limited to 1.7112, 1.71, 1.795, 1.85, 1.888, 1.897, 1.9, 1.95, 1.984, 2, 2.5, 5.987, 2.6, 3, 3.5, 3.7, 4, 4.2, 4.5, 4.9, 5, 5.1, 5.4, 5.498, 5.5, 5.6, 5.65, or the like.

In some possible implementations, the lens 310 may further satisfy a relational expression: 64.5 mm<R1<200 mm, where R1 indicates the curvature radius of the image-side surface of the lens element closest to the image side in the optical axis direction in the lens 310.

Correspondingly, the lens 310 provided in this embodiment of this application satisfies the relational expression: 64.5 mm<R1<200 mm, so that manufacturing difficulty of the lens element closest to the image side in the lens 310 can also be reduced and the yield rate can also be improved on the premise that both a large aperture and a wide field of view are implemented. This helps improve economy, and can further facilitate aberration correction. In addition, the image-side surface of the lens element closest to the image side in the lens 310 can be further prevented from being excessively protruding or excessively flat.

In this embodiment of this application, a specific value of R1 is not limited herein, for example, may include but is not limited to 64.575 mm, 64.8 mm, 65 mm, 66 mm, 67 mm, 70 mm, 72 mm, 73.5 mm, 76.98 mm, 79 mm, 80 mm, 85 mm, 90 mm, 95 mm, 100 mm, 105 mm, 110 mm, 115 mm, 120 mm, 121 mm, 125 mm, 128 mm, 135 mm, 140 mm, 145 mm, 150 mm, 160 mm, 170 mm, 175 mm, 180 mm, 185 mm, 190 mm, 195 mm, 196 mm, 197 mm, 198 mm, 199 mm, 199.5 mm, or the like.

It should be noted that the lens 310 may satisfy at least one of the relational expression 1.7<R1/EFL<5.72 and the relational expression 64.5 mm<R1<200 mm. For example, in this embodiment of this application, the lens 310 satisfies both of the two relational expressions (1.7<R1/EFL<5.72 and 64.5 mm<R1<200 mm). However, in some embodiments, the lens 310 may alternatively satisfy either of the two relational expressions. When the lens 310 satisfies both of the two relational expressions, optical performance and economy of the lens 310 can be further improved.

In some possible implementations, the lens 310 may further satisfy a relational expression: -23<R2/EFL<11.2, where R2 indicates a curvature radius of an object-side surface of the lens element closest to the object side in the optical axis direction in the lens 310.

Correspondingly, the lens 310 provided in this embodiment of this application satisfies the relational expression: -23<R2/EFL<11.2, so that manufacturing difficulty of the lens element closest to the object side in the lens 310 can be reduced and a yield rate can be improved on the premise that both a large aperture and a wide field of view are implemented. This helps improve economy. In addition, the object-side surface of the lens element closest to the object side in the lens 310 can be further prevented from being excessively protruding or excessively concave. That the object-side surface of the lens element closest to the object side is excessively protruding may cause interference between the lens element and another optical element, or cause compression of optical space between the lens 310 and the projection chip 320, or cause damage to a lens element close to the object side. That the object-side surface of the lens element closest to the object side is excessively concave is not conducive to aberration correction.

In this embodiment of this application, a specific ratio of R2/EFL is not limited herein, for example, may include but is not limited to -22.985, -22.61, -22.5, -22.3, -22, -21, -10.5, -9, -8, -7, -6, -5, -4, -3, -2, -1, 0, 1, 1.85, 1.897, 1.9, 1.95, 2, 2.5, 5.987, 2.6, 3, 3.5, 3.6, 4, 4.5, 5, 5.1, 5.159, 5.19, 5.195, 6, 7, 8, 9, 9.1, 9.22, 9.984, 10, 10.01, 11.1, 10.2, 10.22, 10.3, 10.4, 10.45, 10.498, 10.5, 10.6, 10.7, 10.8, 10.9, 11, 11.0986, 11.1, 11.1985, or the like.

In some possible implementations, the lens 310 may further satisfy a relational expression: -860 mm<R2<385 mm, where R2 indicates the curvature radius of the object-side surface of the lens element closest to the object side in the optical axis direction in the lens 310.

Correspondingly, the lens 310 provided in this embodiment of this application satisfies the relational expression: -860 mm<R2<385 mm, so that manufacturing difficulty of the lens element closest to the object side in the lens 310 can also be reduced and the yield rate can also be improved on the premise that both a large aperture and a wide field of view are implemented. This helps improve economy. In addition, the object-side surface of the lens element closest to the object side in the lens 310 can also be prevented from being excessively protruding or excessively concave.

In this embodiment of this application, a specific value of R2 is not limited herein, for example, may include but is not limited to -859 mm, -856 mm, -850 mm, -840 mm, -390 mm, - 350 mm, -300 mm, -250 mm, -200 mm, -150 mm, -100 mm, 0, 10 mm, 50 mm, 73.5 mm, 76.98 mm, 79 mm, 80 mm, 85 mm, 90 mm, 95 mm, 100 mm, 105 mm, 110 mm, 115 mm, 120 mm, 121 mm, 125 mm, 129 mm, 130 mm, 140 mm, 150 mm, 160 mm, 170 mm, 180 mm, 181 mm, 182 mm, 183 mm, 184 mm, 184.954 mm, 200 mm, 250 mm, 300 mm, 310 mm, 340 mm, 350 mm, 355 mm, 359 mm, 360 mm, 370 mm, 375 mm, 380 mm, 381 mm, 382 mm, 383 mm, 384 mm, 384.598 mm, or the like.

It should be noted that the lens 310 may satisfy at least one of the relational expression -23<R2/EFL<11.2 and the relational expression -860 mm<R2<385 mm. For example, in this embodiment of this application, the lens 310 satisfies both of the two relational expressions (-12<R2/EFL<11.2 and -860 mm<R2<385 mm). However, in some embodiments, the lens 310 may alternatively satisfy either of the two relational expressions. When the lens 310 satisfies both of the two relational expressions, optical performance and economy of the lens 310 can be further improved.

In some possible implementations, the lens 310 satisfies a relational expression: 0.9<BFL/EFL<1.15, where BFL indicates a back focal length of the lens 310.

Correspondingly, the lens 310 provided in this embodiment of this application satisfies the relational expression: 0.9<BFL/EFL<1.15, so that an optical path of the lens 310 can be prevented from being excessively long or excessively short. That the optical path of the lens 310 is excessively long is not conducive to design. That the optical path of the lens 310 is excessively short is not conducive to setting of a back-end optical path.

In this embodiment of this application, a specific ratio BFL/EFL is not limited herein, for example, may include but is not limited to 0.91, 0.92, 0.93, 0.94, 0.95, 0.96, 0.97, 0.98, 0.99, 1, 1.01, 1.054, 1.0698, 1.1, 1.11, 1.12, 1.13, 1.14, or the like.

In some possible implementations, the lens element closest to the image side in the lens 310 has positive focal power in the optical axis direction.

Correspondingly, in the lens 310 provided in this embodiment of this application, the lens element closest to the image side in the lens is set to be a lens element having positive focal power, which can help improve economy of the lens 310 on the premise that both a large aperture and a wide field of view are implemented.

In some possible implementations, the lens element closest to the object side in the lens 310 has positive focal power in the optical axis direction

Correspondingly, in the lens 310 provided in this embodiment of this application, the lens element closest to the object side in the lens is set to be a lens element having positive focal power, so that an amount of light entering the lens 310 can be increased, to improve optical performance. In addition, economy of the lens 310 can be further improved.

In some possible implementations, at least one lens element is a spherical lens element. For example, as shown in FIG. 2, all the five lens elements in the lens 310 are spherical lens elements. Certainly, there may alternatively be less than five spherical lens elements.

Correspondingly, a larger quantity of spherical lens element used in the lens 310 provided in this embodiment of this application indicates a larger extent to which processing difficulty of the lens 310 is reduced. This helps improve the yield rate, and can further improve imaging quality.

In some possible implementations, each lens element is a glass lens element.

Correspondingly, each lens element in the lens 310 provided in this embodiment of this application is a glass lens element, so that reliability of the lens 310 can be improved, and imaging quality can be ensured.

Certainly, each lens element in the lens 310 may alternatively be an optical plastic lens element in addition to a glass lens element. In this embodiment of this application, each lens element is a glass lens element, so that the lens element can better adapt to a use environment of a transportation means, which helps improve reliability of the lens 310110.

The following describes a structure and performance of the display module 300 provided in this embodiment of this application with reference to specific embodiments.

### Embodiment 1:

Still refer to FIG. 2. The display module 300 provided in Embodiment 1 includes the lens 310, the diaphragm 30, the cover glass 20, and the projection chip 320. The cover glass 20 is disposed between the projection chip 320 and the lens 310. In the optical axis direction from the image side to the object side, the lens 310 includes the first lens element 11, the second lens element 12, the third lens element 13, the fourth lens element 14, and the fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to the focal length EFL of the lens 310 is |f1/EFL|=3.31. The second lens element 12 has negative focal power, and a ratio of a focal length f2 of the second lens element 12 to the focal length EFL of the lens 310 is |f2/EFL|=84.552. The third lens element 13 has negative focal power, and a ratio of a focal length f3 of the third lens element 13 to the focal length EFL of the lens 310 is |f3/EFL|=1.11. The fourth lens element 14 has positive focal power, and a ratio of a focal length f4 of the fourth lens element 14 to the focal length EFL of the lens 310 is |f4/EFL|=1.4759. The fifth lens element 15 has positive focal power, and a ratio of a focal length f5 of the fifth lens element 15 to the focal length EFL of the lens 310 is |f5/EFL|=1.2223. The ratio of the curvature radius of the image-side surface of the lens element closest to the image side in the lens 310 to the focal length of the lens 310 is R1/EFL=1.795, which is greater than 1.7 and less than 5.72, and meets a requirement. The curvature radius of the image-side surface of the lens element closest to the image side in the lens 310 is 64.6070 mm, which is greater than 64.5 mm and less than 200 mm, and meets a requirement.

The ratio of the curvature radius of the object-side surface of the lens element closest to the object side in the lens 310 to the focal length of the lens 310 is R2/EFL=-23.611, which is greater than -23 and less than 11.2, and meets a requirement. The curvature radius R1 of the object-side surface of the lens element closest to the object side in the lens 310 is -850 mm, which is greater than -860 mm and less than 385 mm, and meets a requirement.

The focal length EFL of the lens 310 is 35.66 mm, which is greater than 33 mm and less than 38 mm, and meets a requirement. The ratio of the back focal length BFL to the focal length EFL of the lens 310 is BFL/EFL=1.075, which is greater than 0.9 and less than 1.15, and meets a requirement.

**Table 1 shows optical parameters of optical elements in the display module 300 provided in Embodiment 1.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 64.607 | 3.894 | 1.92 | 20.9 |
| | S2 | Spherical surface | 148.303 | 13.381 | | |
| L2 | S3 | Spherical surface | -22.341 | 16.633 | 2.003 | 28.3 |
| | S4 | Spherical surface | -30.507 | 0.050 | | |
| L3 | S5 | Spherical surface | Infinity | 0.651 | | |
| L4 | S6 | Spherical surface | -205.595 | 1.000 | 1.946 | 17.9 |
| | S7 | Spherical surface | 47.711 | 1.811 | | |
| L5 | S8 | Spherical surface | 87.942 | 5.924 | 1.816 | 46.6 |
| | S9 | Spherical surface | -84.264 | 0.050 | | |
| L6 | S10 | Spherical surface | 37.652 | 7.856 | 1.816 | 46.6 |
| | S11 | Spherical surface | -850.000 | 5.891 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on the optical axis.

Th indicates a surface thickness of the optical element in the optical axis direction.

Nd indicates a refractive index of each optical element irradiated by a d-line.

Vd indicates an Abbe number of the optical element.

**Table 2 shows optical parameters of the lens 310 provided in Embodiment 1.**

| | | | |
|---|---|---|---|
| f1 (mm) | 119.1414 | EFL (mm) | 35.66 |
| f2 (mm) | 3054.750 | TTL (mm) | 90 |
| f3 (mm) | -40.010 | Fno | 1.36 |
| f4 (mm) | 53.131 | BFL (mm) | 38.67 |
| f5 (mm) | 44.001 | R1 (mm) | 64.6070 |
| R2 (mm) | -850 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

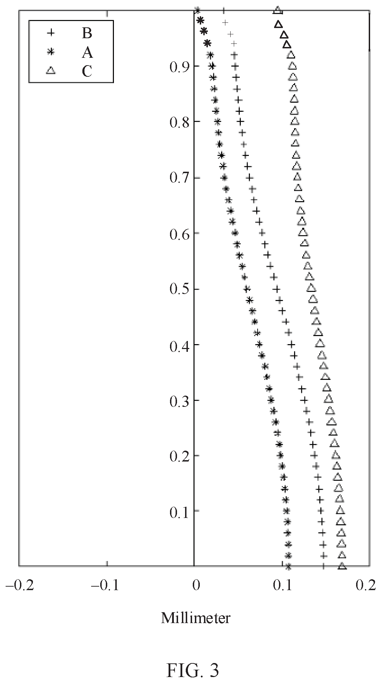

FIG. 3 is a diagram of spherical chromatic aberration of the lens 310 in FIG. 2. In FIG. 3, a vertical coordinate represents a normalized pupil coordinate, and a horizontal coordinate represents an axial aberration in a unit of millimeter. In addition, in FIG. 3, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 3 that, in this embodiment, the axial aberration is controlled within an excessively small range and is well corrected.

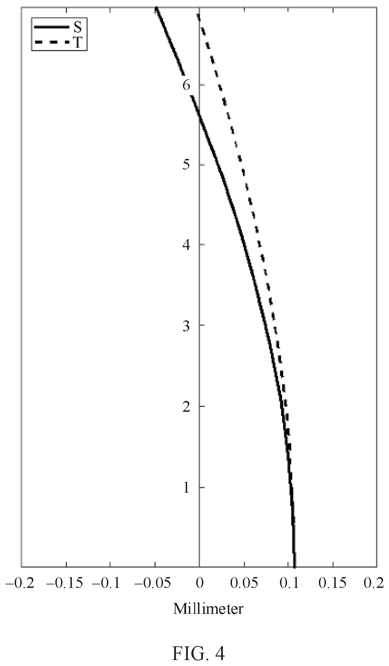

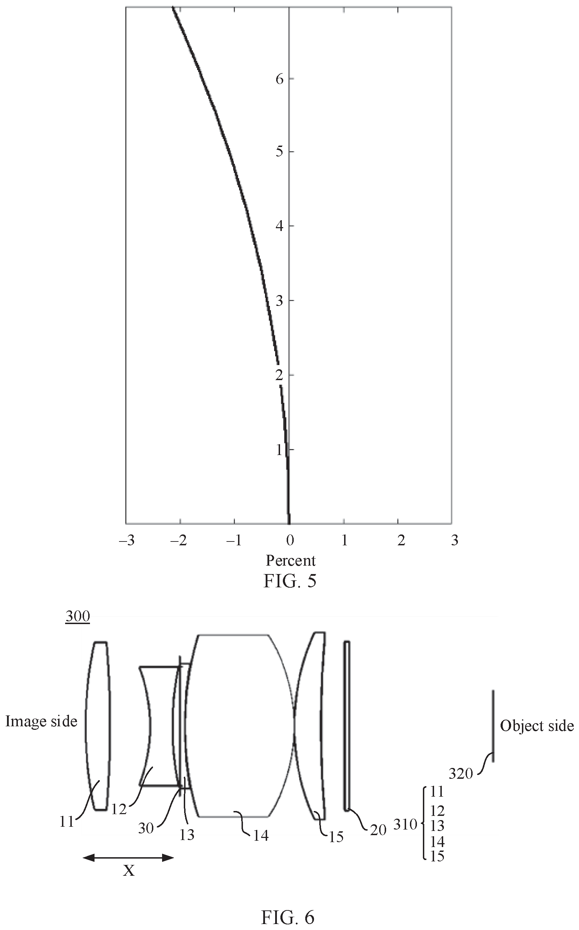

FIG. 4 is a diagram of astigmatism and field curvature of the lens 310 in FIG. 2, and FIG. 5 is a diagram of distortion of the lens 310 in FIG. 2. In FIG. 4, S represents field curvature values of light with a wavelength of 525 nm on a tangential image surface, and T represents field curvature values of the light with the wavelength of 525 nm on a sagittal image surface. In FIG. 5, a solid line represents distortion values of the light with a center wavelength of 525 nm that passes through the lens 310 in this embodiment. In this embodiment, with reference to FIG. 4 and FIG. 5, it can be learned that the lens 310 provided in this embodiment controls the field curvature and the distortion within corresponding ranges, so that a use requirement can be met.

### Embodiment 2:

FIG. 6 is a diagram of a structure of a second display module 300 according to an embodiment of this application. Refer to FIG. 6. The display module 300 provided in Embodiment 2 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.4248. The second lens element 12 has negative focal power, and a ratio of a focal length f2 of the second lens element 12 to the focal length EFL of the lens 310 is |f2/EFL|=0.517. The third lens element 13 has negative focal power, and a ratio of a focal length f3 of the third lens element 13 to the focal length EFL of the lens 310 is |f3/EFL|=1.791. The fourth lens element 14 has positive focal power, and a ratio of a focal length f4 of the fourth lens element 14 to the focal length EFL of the lens 310 is |f4/EFL|=0.76. The fifth lens element 15 has positive focal power, and a ratio of a focal length f5 of the fifth lens element 15 to the focal length EFL of the lens 310 is |f5/EFL|=1.680.

A ratio of a curvature radius of an image-side surface of a lens element closest to an image side in the lens 310 to the focal length of the lens 310 is R1/EFL=1.888, which is greater than 1.7 and less than 5.72, and meets a requirement. The curvature radius of the image-side surface of the lens element closest to the image side in the lens 310 is 67.961 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=5.0257, which is greater than -23 and less than 11.2, and meets a requirement. The curvature radius R2 of the object-side surface of the lens element closest to the object side in the lens 310 is 180.922 mm, which is greater than -860 mm and less than 385 mm, and meets a requirement.

The focal length EFL of the lens 310 is 35.99 mm, which is greater than 33 mm and less than 38 mm, and meets a requirement. A ratio of a back focal length BFL to the focal length EFL of the lens 310 is BFL/EFL=1.054, which is greater than 0.9 and less than 1.15, and meets a requirement.

**Table 3 shows optical parameters of optical elements in the display module 300 provided in Embodiment 2.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 67.961 | 5.378 | 1.92 | 20.9 |
| | S2 | Spherical surface | -175.765 | 8.888 | | |
| L2 | S3 | Spherical surface | -28.143 | 4.977 | 2.003 | 28.3 |
| | S4 | Spherical surface | 50.453 | 1.564 | | |
| L3 | S5 | Spherical surface | Infinity | 0.050 | | |
| L4 | S6 | Spherical surface | -56678.286 | 1.102 | 1.946 | 17.9 |
| | S7 | Spherical surface | 60.654 | 0.050 | | |
| L5 | S8 | Spherical surface | 55.475 | 24.040 | 1.816 | 46.6 |
| | S9 | Spherical surface | -30.473 | 0.050 | | |
| L6 | S10 | Spherical surface | 39.602 | 5.901 | 1.816 | 46.6 |
| | S11 | Spherical surface | 180.922 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 4 shows optical parameters of the lens 310 provided in Embodiment 2.**

| | | | |
|---|---|---|---|
| f1 (mm) | 51.292 | EFL (mm) | 35.99 |
| f2 (mm) | -18.618 | TTL (mm) | 90 |
| f3 (mm) | -64.478 | Fno | 1.37 |
| f4 (mm) | 27.362 | BFL (mm) | 38.67 |
| f5 (mm) | 60.487 | R1 (mm) | 67.961 |
| R2 (mm) | 180.922 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

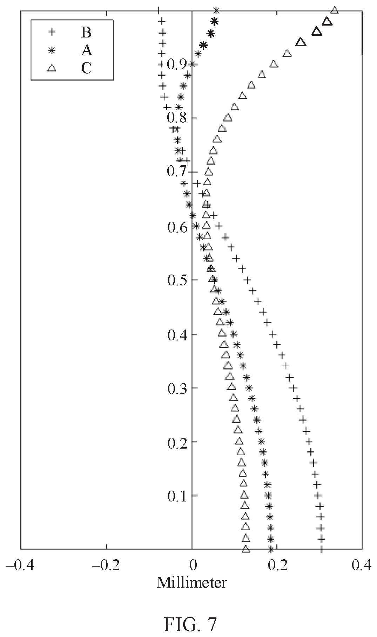

FIG. 7 is a diagram of spherical chromatic aberration of the lens 310 in FIG. 6. In FIG. 6, a vertical coordinate represents a normalized pupil coordinate, and a horizontal coordinate represents an axial aberration in a unit of millimeter. In addition, in FIG. 6, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 6 that, in this embodiment, the axial aberration is controlled within an excessively small range and is well corrected.

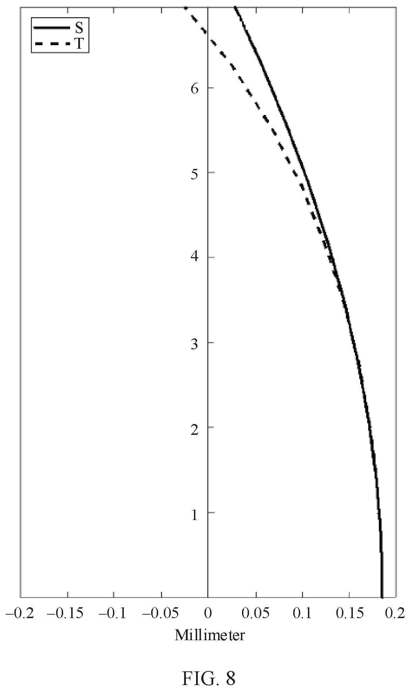

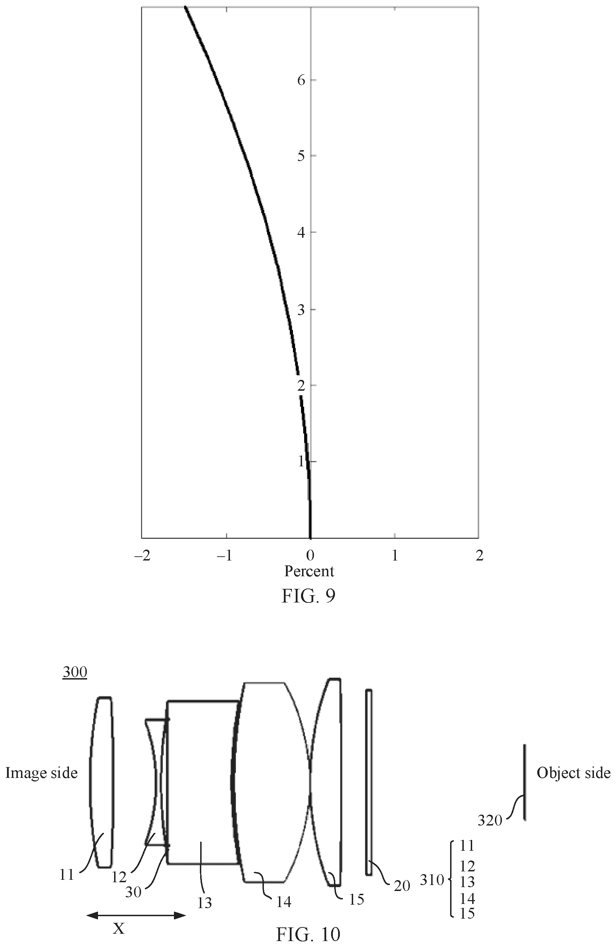

FIG. 8 is a diagram of astigmatism and field curvature of the lens 310 in FIG. 6, and FIG. 9 is a diagram of distortion of the lens 310 in FIG. 6. In FIG. 8, S represents field curvature values of light with a wavelength of 525 nm on a tangential image surface, and T represents field curvature values of the light with the wavelength of 525 nm on a sagittal image surface. In FIG. 9, a solid line represents distortion values of the light with a center wavelength of 525 nm that passes through the lens 310 in this embodiment. In this embodiment, with reference to FIG. 8 and FIG. 9, it can be learned that the lens 310 provided in this embodiment controls the field curvature and the distortion within corresponding ranges, so that a use requirement can be met.

### Embodiment 3:

FIG. 10 is a diagram of a structure of a third display module 300 according to an embodiment of this application. Refer to FIG. 10. The display module 300 provided in Embodiment 3 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.541. The second lens element 12 has negative focal power, and a ratio of a focal length f2 of the second lens element 12 to the focal length EFL of the lens 310 is |f2/EFL|=0.6. The third lens element 13 has negative focal power, and a ratio of a focal length f3 of the third lens element 13 to the focal length EFL of the lens 310 is |f3/EFL|=2.621. The fourth lens element 14 has positive focal power, and a ratio of a focal length f4 of the fourth lens element 14 to the focal length EFL of the lens 310 is |f4/EFL|=0.871. The fifth lens element 15 has positive focal power, and a ratio of a focal length f5 of the fifth lens element 15 to the focal length EFL of the lens 310 is |f5/EFL|=1.550.

A ratio of a curvature radius of an image-side surface of a lens element closest to an image side in the lens 310 to the focal length of the lens 310 is R1/EFL=1.932, which is greater than 1.7 and less than 5.72, and meets a requirement. The curvature radius of the image-side surface of the lens element closest to the image side in the lens 310 is 69.559 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=-23.611, which is greater than -23 and less than 11.2, and meets a requirement. The curvature radius R2 of the object-side surface of the lens element closest to the object side in the lens 310 is -850 mm, which is greater than -860 mm and less than 385 mm, and meets a requirement.

The focal length EFL of the lens 310 is 35.99 mm, which is greater than 33 mm and less than 38 mm, and meets a requirement. A ratio of a back focal length BFL to the focal length EFL of the lens 310 is BFL/EFL=1.054, which is greater than 0.9 and less than 1.15, and meets a requirement.

**Table 5 shows optical parameters of optical elements in the display module 300 provided in Embodiment 3.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 69.559 | 4.892 | 1.95 | 17.9 |
| | S2 | Spherical surface | -225.590 | 8.796 | | |
| L2 | S3 | Spherical surface | -29.986 | 1.057 | 1.92 | 18.9 |
| | S4 | Spherical surface | 64.185 | 1.175 | | |
| L3 | S5 | Spherical surface | Infinity | 0.050 | | |
| L4 | S6 | Spherical surface | 563.812 | 13.412 | 1.92 | 20.9 |
| | S7 | Spherical surface | 75.747 | 0.506 | | |
| L5 | S8 | Spherical surface | 80.559 | 15.584 | 1.82 | 46.6 |
| | S9 | Spherical surface | -34.645 | 0.050 | | |
| L6 | S10 | Spherical surface | 48.348 | 6.479 | 1.82 | 46.6 |
| | S11 | Spherical surface | -850.000 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 6 shows optical parameters of the lens 310 provided in Embodiment 3.**

| | | | |
|---|---|---|---|
| f1 (mm) | 55.489 | EFL (mm) | 35.99 |
| f2 (mm) | -21.592 | TTL (mm) | 90 |
| f3 (mm) | -94.376 | Fno | 1.36 |
| f4 (mm) | 31.363 | BFL (mm) | 37.948 |
| f5 (mm) | 55.787 | R1 (mm) | 69.559 |
| R2 (mm) | -850 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

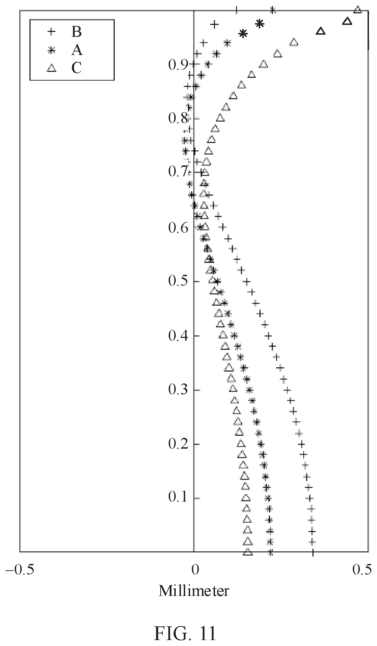

FIG. 11 is a diagram of spherical chromatic aberration of the lens 310 in FIG. 10. In FIG. 11, a vertical coordinate represents a normalized pupil coordinate, and a horizontal coordinate represents an axial aberration in a unit of millimeter. In addition, in FIG. 11, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 11 that, in this embodiment, the axial aberration is controlled within an excessively small range and is well corrected.

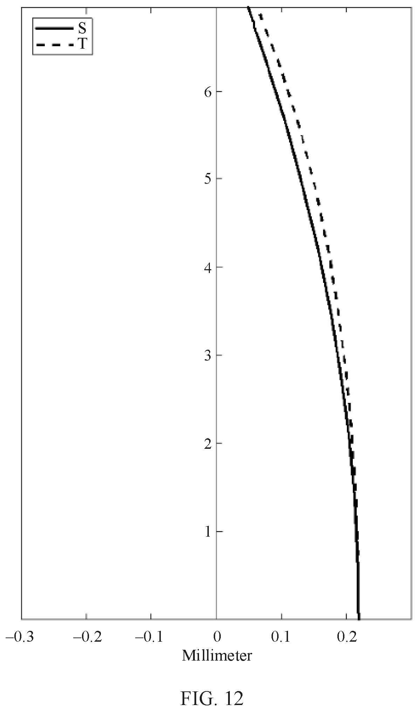

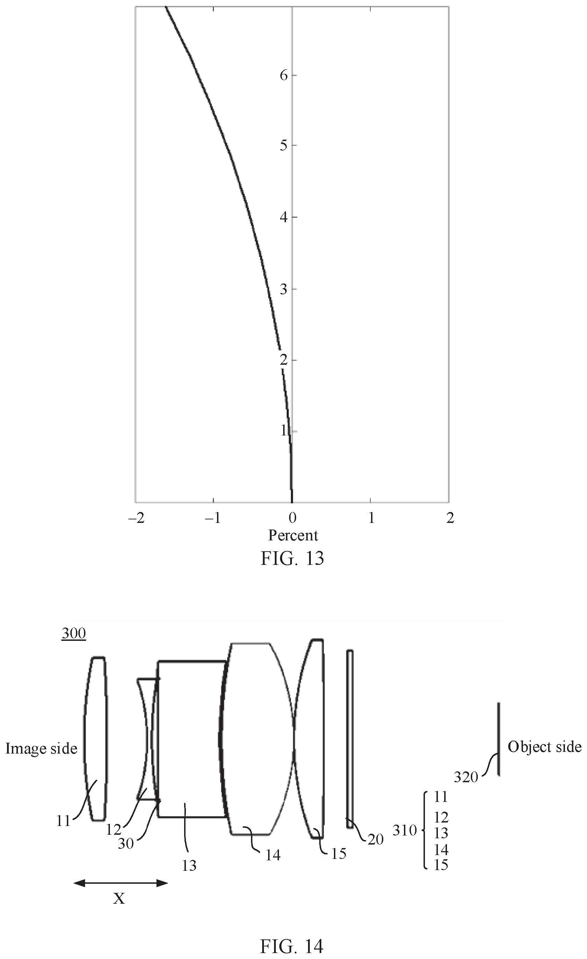

FIG. 12 is a diagram of astigmatism and field curvature of the lens 310 in FIG. 10, and FIG. 13 is a diagram of distortion of the lens 310 in FIG. 10. In FIG. 12, S represents field curvature values of light with a wavelength of 525 nm on a tangential image surface, and T represents field curvature values of the light with the wavelength of 525 nm on a sagittal image surface. In FIG. 13, a solid line represents distortion values of the light with a center wavelength of 525 nm that passes through the lens 310 in this embodiment. In this embodiment, with reference to FIG. 12 and FIG. 13, it can be learned that the lens 310 provided in this embodiment controls the field curvature and the distortion within corresponding ranges, so that a use requirement can be met.

### Embodiment 4:

FIG. 14 is a diagram of a structure of a fourth display module 300 according to an embodiment of this application. Refer to FIG. 14. The display module 300 provided in Embodiment 4 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.555. The second lens element 12 has negative focal power, and a ratio of a focal length f2 of the second lens element 12 to the focal length EFL of the lens 310 is |f2/EFL|=0.635. The third lens element 13 has negative focal power, and a ratio of a focal length f3 of the third lens element 13 to the focal length EFL of the lens 310 is |f3/EFL|=2.923. The fourth lens element 14 has positive focal power, and a ratio of a focal length f4 of the fourth lens element 14 to the focal length EFL of the lens 310 is |f4/EFL|=0.924. The fifth lens element 15 has positive focal power, and a ratio of a focal length f5 of the fifth lens element 15 to the focal length EFL of the lens 310 is |f5/EFL|=1.546.

A ratio of a curvature radius of an image-side surface of a lens element closest to an image side in the lens 310 to the focal length of the lens 310 is R1/EFL=1.984, which is greater than 1.7 and less than 5.72, and meets a requirement. The curvature radius of the image-side surface of the lens element closest to the image side in the lens 310 is 69.559 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=-23.611, which is greater than -23 and less than 11.2, and meets a requirement. The curvature radius R2 of the object-side surface of the lens element closest to the object side in the lens 310 is -850 mm, which is greater than -860 mm and less than 385 mm, and meets a requirement.

The focal length EFL of the lens 310 is 35.99 mm, which is greater than 33 mm and less than 38 mm, and meets a requirement. A ratio of a back focal length BFL to the focal length EFL of the lens 310 is BFL/EFL=1.054, which is greater than 0.9 and less than 1.15, and meets a requirement.

**Table 7 shows optical parameters of optical elements in the display module 300 provided in Embodiment 4.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 71.420 | 4.960 | 1.95 | 17.9 |
| | S2 | Spherical surface | -215.344 | 7.689 | | |
| L2 | S3 | Spherical surface | -31.106 | 1.000 | 1.92 | 18.9 |
| | S4 | Spherical surface | 71.086 | 1.124 | | |
| L3 | S5 | Spherical surface | Infinity | 0.050 | | |
| L4 | S6 | Spherical surface | 2132.572 | 17.291 | 1.92 | 20.9 |
| | S7 | Spherical surface | 93.518 | 0.500 | | |
| L5 | S8 | Spherical surface | 98.525 | 11.991 | 1.82 | 46.6 |
| | S9 | Spherical surface | -35.810 | 0.050 | | |
| L6 | S10 | Spherical surface | 48.228 | 7.345 | 1.82 | 46.6 |
| | S11 | Spherical surface | -850.000 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 8 shows optical parameters of the lens 310 provided in Embodiment 4.**

| | | | |
|---|---|---|---|
| f1 (mm) | 55.489 | EFL (mm) | 35.99 |
| f2 (mm) | -21.592 | TTL (mm) | 90 |
| f3 (mm) | -94.376 | Fno | 1.36 |
| f4 (mm) | 31.363 | BFL (mm) | 37.948 |
| f5 (mm) | 55.787 | R1 (mm) | 69.559 |
| R2 (mm) | -850 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

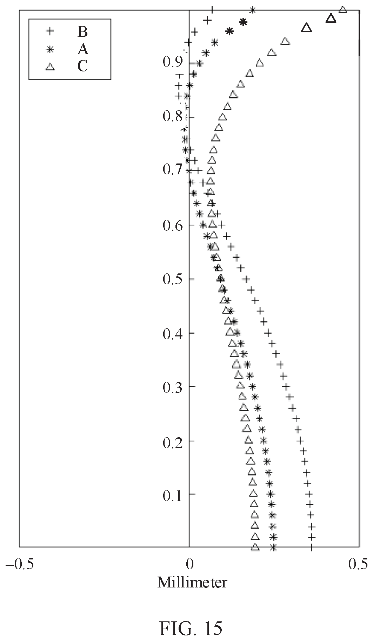

FIG. 15 is a diagram of spherical chromatic aberration of the lens 310 in FIG. 14. In FIG. 15, a vertical coordinate represents a normalized pupil coordinate, and a horizontal coordinate represents an axial aberration in a unit of millimeter. In addition, in FIG. 15, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 15 that, in this embodiment, the axial aberration is controlled within an excessively small range and is well corrected.

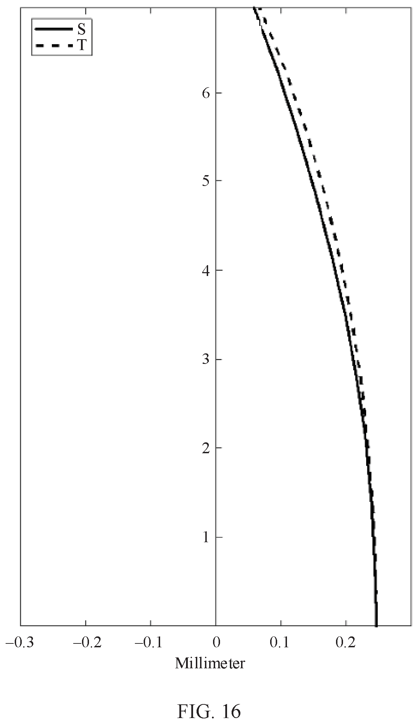

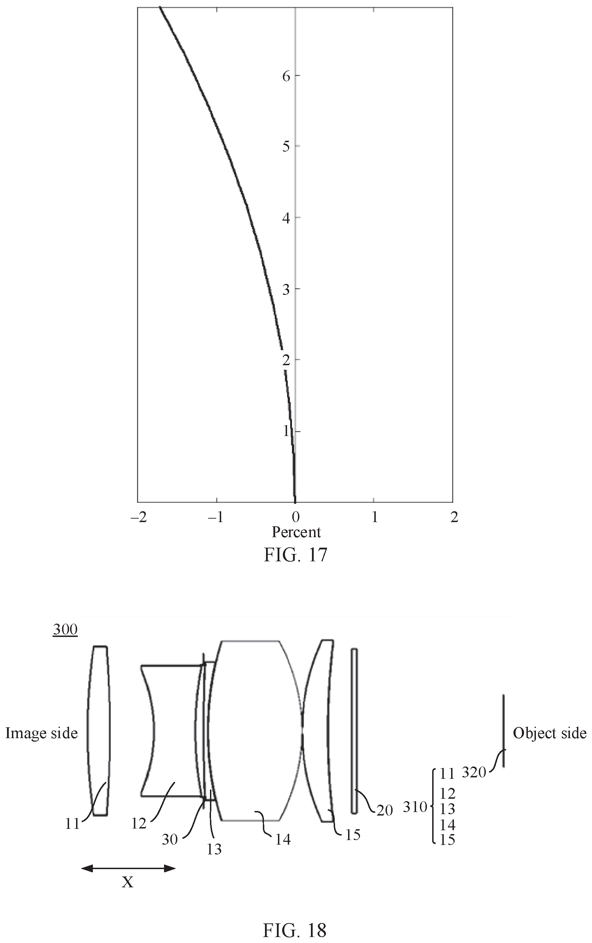

FIG. 16 is a diagram of astigmatism and field curvature of the lens 310 in FIG. 14, and FIG. 17 is a diagram of distortion of the lens 310 in FIG. 14. In FIG. 16, S represents field curvature values of light with a wavelength of 525 nm on a tangential image surface, and T represents field curvature values of the light with the wavelength of 525 nm on a sagittal image surface. In FIG. 17, a solid line represents distortion values of the light with a center wavelength of 525 nm that passes through the lens 310 in this embodiment. In this embodiment, with reference to FIG. 16 and FIG. 17, it can be learned that the lens 310 provided in this embodiment controls the field curvature and the distortion within corresponding ranges, so that a use requirement can be met.

### Embodiment 5:

FIG. 18 is a diagram of a structure of a fifth display module 300 according to an embodiment of this application. Refer to FIG. 18. The display module 300 provided in Embodiment 5 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.833. The second lens element 12 has negative focal power, and a ratio of a focal length f2 of the second lens element 12 to the focal length EFL of the lens 310 is |f2/EFL|=0.610. The third lens element 13 has negative focal power, and a ratio of a focal length f3 of the third lens element 13 to the focal length EFL of the lens 310 is |f3/EFL|=2.026. The fourth lens element 14 has positive focal power, and a ratio of a focal length f4 of the fourth lens element 14 to the focal length EFL of the lens 310 is |f4/EFL|=0.760. The fifth lens element 15 has positive focal power, and a ratio of a focal length f5 of the fifth lens element 15 to the focal length EFL of the lens 310 is |f5/EFL|=1.732.

A ratio of a curvature radius of an image-side surface of a lens element closest to an image side in the lens 310 to the focal length of the lens 310 is R1/EFL=2.75, which is greater than 1.7 and less than 5.72, and meets a requirement. The curvature radius of the image-side surface of the lens element closest to the image side in the lens 310 is 99 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=3.60, which is greater than -23 and less than 11.2, and meets a requirement. The curvature radius R2 of the object-side surface of the lens element closest to the object side in the lens 310 is 129 mm, which is greater than -860 mm and less than 385 mm, and meets a requirement.

The focal length EFL of the lens 310 is 35.997 mm, which is greater than 33 mm and less than 38 mm, and meets a requirement. A ratio of a back focal length BFL to the focal length EFL of the lens 310 is BFL/EFL=1.054, which is greater than 0.9 and less than 1.15, and meets a requirement.

**Table 9 shows optical parameters of optical elements in the display module 300 provided in Embodiment 5.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 99.000 | 4.849 | 1.95 | 17.9 |
| | S2 | Spherical surface | -174.582 | 9.444 | | |
| L2 | S3 | Spherical surface | -27.812 | 8.991 | 1.81 | 22.7 |
| | S4 | Spherical surface | 58.580 | 1.685 | | |
| L3 | S5 | Spherical surface | Infinity | 0.050 | | |
| L4 | S6 | Spherical surface | 249.924 | 1.000 | 1.95 | 17.9 |
| | S7 | Spherical surface | 54.858 | 0.050 | | |
| L5 | S8 | Spherical surface | 52.589 | 20.296 | 1.82 | 46.6 |
| | S9 | Spherical surface | -32.474 | 0.050 | | |
| L6 | S10 | Spherical surface | 37.443 | 5.585 | 1.82 | 46.6 |
| | S11 | Spherical surface | 129.470 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 10 shows optical parameters of the lens 310 provided in Embodiment 5.**

| | | | |
|---|---|---|---|
| f1 (mm) | 65.972 | EFL (mm) | 35.997 |
| f2 (mm) | -21.923 | TTL (mm) | 90 |
| f3 (mm) | -72.941 | Fno | 1.36 |
| f4 (mm) | 27.349 | BFL (mm) | 37.948 |
| f5 (mm) | 62.323 | R1 (mm) | 99 |
| R2 (mm) | 129 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

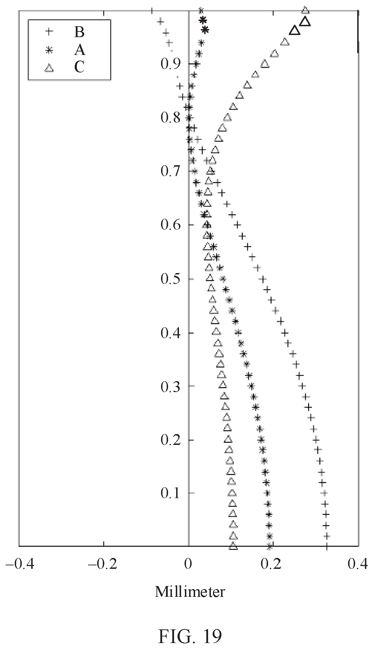

FIG. 19 is a diagram of spherical chromatic aberration of the lens 310 in FIG. 18. In FIG. 19, a vertical coordinate represents a normalized pupil coordinate, and a horizontal coordinate represents an axial aberration in a unit of millimeter. In addition, in FIG. 19, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 19 that, in this embodiment, the axial aberration is controlled within an excessively small range and is well corrected.

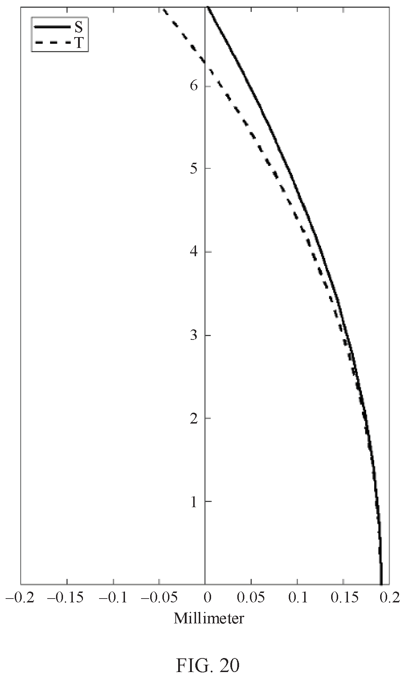

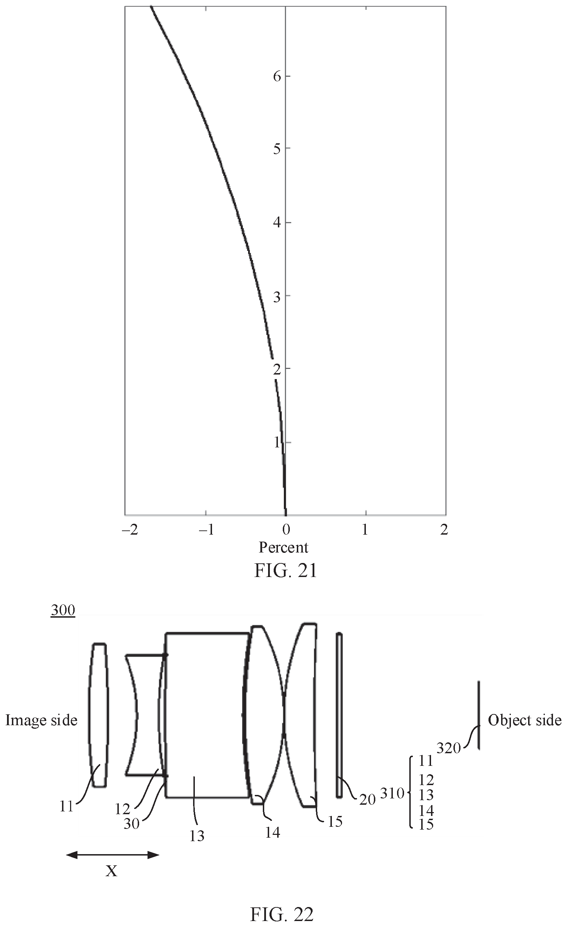

FIG. 20 is a diagram of astigmatism and field curvature of the lens 310 in FIG. 18, and FIG. 21 is a diagram of distortion of the lens 310 in FIG. 18. In FIG. 20, S represents field curvature values of light with a wavelength of 525 nm on a tangential image surface, and T represents field curvature values of the light with the wavelength of 525 nm on a sagittal image surface. In FIG. 21, a solid line represents distortion values of the light with a center wavelength of 525 nm that passes through the lens 310 in this embodiment. In this embodiment, with reference to FIG. 20 and FIG. 21, it can be learned that the lens 310 provided in this embodiment controls the field curvature and the distortion within corresponding ranges, so that a use requirement can be met.

### Embodiment 6:

FIG. 22 is a diagram of a structure of a fifth display module 300 according to an embodiment of this application. Refer to FIG. 22. The display module 300 provided in Embodiment 6 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.903. The second lens element 12 has negative focal power, and a ratio of a focal length f2 of the second lens element 12 to the focal length EFL of the lens 310 is |f2/EFL|=0.685. The third lens element 13 has negative focal power, and a ratio of a focal length f3 of the third lens element 13 to the focal length EFL of the lens 310 is |f3/EFL|=3.927. The fourth lens element 14 has positive focal power, and a ratio of a focal length f4 of the fourth lens element 14 to the focal length EFL of the lens 310 is |f4/EFL|=0.934. The fifth lens element 15 has positive focal power, and a ratio of a focal length f5 of the fifth lens element 15 to the focal length EFL of the lens 310 is |f5/EFL|=1.670.

A ratio of a curvature radius of an image-side surface of a lens element closest to an image side in the lens 310 to the focal length of the lens 310 is R1/EFL=2.892, which is greater than 1.7 and less than 5.72, and meets a requirement. The curvature radius of the image-side surface of the lens element closest to the image side in the lens 310 is 99 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=10.22, which is greater than -23 and less than 11.2, and meets a requirement. The curvature radius R2 of the object-side surface of the lens element closest to the object side in the lens 310 is 350 mm, which is greater than -860 mm and less than 385 mm, and meets a requirement.

The focal length EFL of the lens 310 is 34.23 mm, which is greater than 33 mm and less than 38 mm, and meets a requirement. A ratio of a back focal length BFL to the focal length EFL of the lens 310 is BFL/EFL=1.108, which is greater than 0.9 and less than 1.15, and meets a requirement.

**Table 11 shows optical parameters of optical elements in the display module 300 provided in Embodiment 6.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 99.000 | 4.362 | 1.95 | 17.9 |
| | S2 | Spherical surface | -168.910 | 6.675 | | |
| L2 | S3 | Spherical surface | -29.110 | 5.056 | 1.81 | 22.7 |
| | S4 | Spherical surface | 61.337 | 1.430 | | |
| L3 | S5 | Spherical surface | Infinity | 0.050 | | |
| L4 | S6 | Spherical surface | 347.262 | 17.944 | 1.95 | 17.9 |
| | S7 | Spherical surface | 92.122 | 0.500 | | |
| L5 | S8 | Spherical surface | 92.122 | 8.983 | 1.82 | 46.6 |
| | S9 | Spherical surface | -35.190 | 0.050 | | |
| L6 | S10 | Spherical surface | 42.441 | 6.951 | 1.82 | 46.6 |
| | S11 | Spherical surface | 350.000 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 12 shows optical parameters of the lens 310 provided in Embodiment 6.**

| | | | |
|---|---|---|---|
| f1 (mm) | 65.134 | EFL (mm) | 34.23 |
| f2 (mm) | -23.435 | TTL (mm) | 90 |
| f3 (mm) | -134.439 | Fno | 1.292 |
| f4 (mm) | 31.969 | BFL (mm) | 37.958 |
| f5 (mm) | 58.114 | R1 (mm) | 99 |
| R2 (mm) | 350 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

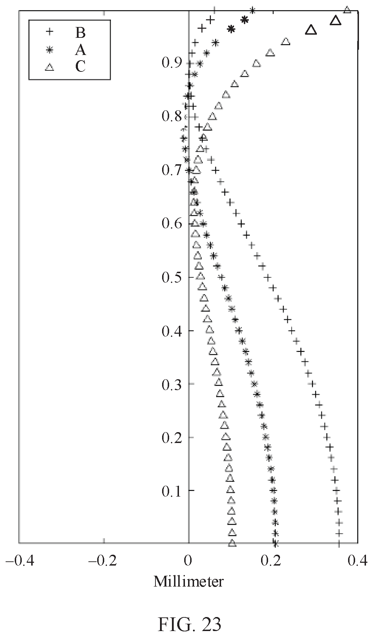

FIG. 23 is a diagram of spherical chromatic aberration of the lens 310 in FIG. 22. In FIG. 23, a vertical coordinate represents a normalized pupil coordinate, and a horizontal coordinate represents an axial aberration in a unit of millimeter. In addition, in FIG. 23, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 23 that, in this embodiment, the axial aberration is controlled within an excessively small range and is well corrected.

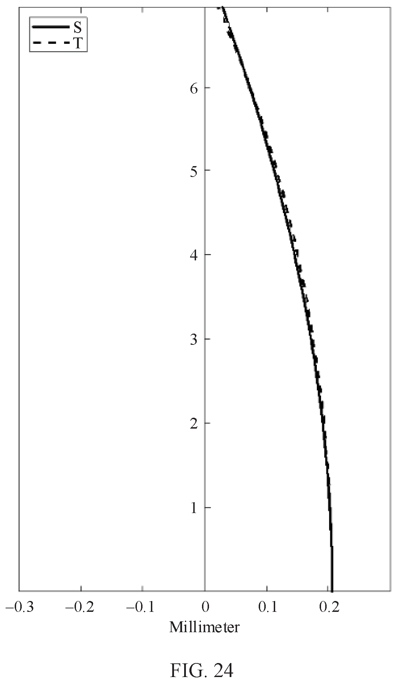

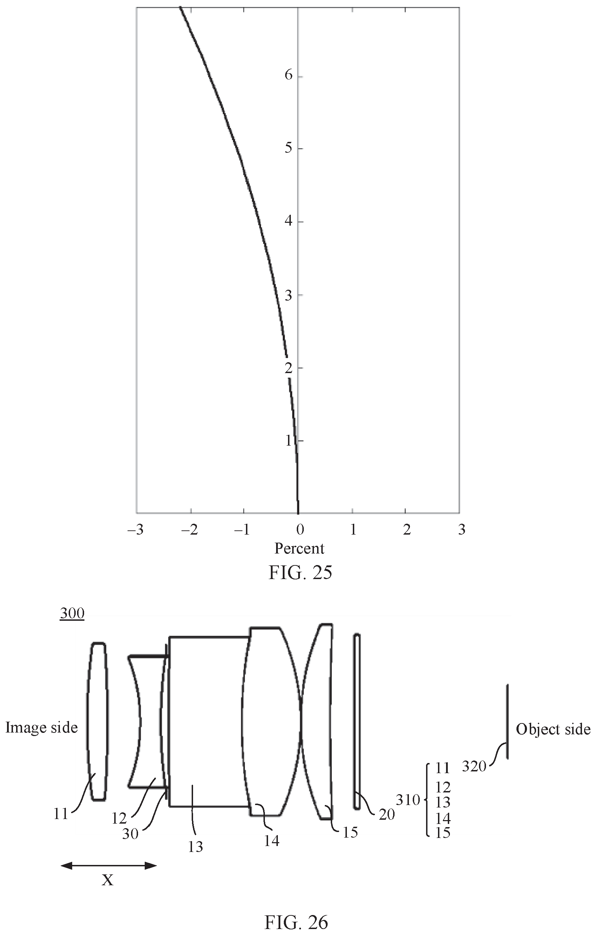

FIG. 24 is a diagram of astigmatism and field curvature of the lens 310 in FIG. 22, and FIG. 25 is a diagram of distortion of the lens 310 in FIG. 22. In FIG. 24, S represents field curvature values of light with a wavelength of 525 nm on a tangential image surface, and T represents field curvature values of the light with the wavelength of 525 nm on a sagittal image surface. In FIG. 25, a solid line represents distortion values of the light with a center wavelength of 525 nm that passes through the lens 310 in this embodiment. In this embodiment, with reference to FIG. 24 and FIG. 25, it can be learned that the lens 310 provided in this embodiment controls the field curvature and the distortion within corresponding ranges, so that a use requirement can be met.

### Embodiment 7:

FIG. 26 is a diagram of a structure of a sixth display module 300 according to an embodiment of this application. Refer to FIG. 26. The display module 300 provided in Embodiment 7 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.933. The second lens element 12 has negative focal power, and a ratio of a focal length f2 of the second lens element 12 to the focal length EFL of the lens 310 is |f2/EFL|=0.751. The third lens element 13 has negative focal power, and a ratio of a focal length f3 of the third lens element 13 to the focal length EFL of the lens 310 is |f3/EFL|=2.73. The fourth lens element 14 has positive focal power, and a ratio of a focal length f4 of the fourth lens element 14 to the focal length EFL of the lens 310 is |f4/EFL|=0.907. The fifth lens element 15 has positive focal power, and a ratio of a focal length f5 of the fifth lens element 15 to the focal length EFL of the lens 310 is |f5/EFL|=1.627.

A ratio of a curvature radius of an image-side surface of a lens element closest to an image side in the lens 310 to the focal length of the lens 310 is R1/EFL=2.808, which is greater than 1.7 and less than 5.72, and meets a requirement. The curvature radius of the image-side surface of the lens element closest to the image side in the lens 310 is 99 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=9.928, which is greater than -23 and less than 11.2, and meets a requirement. The curvature radius R2 of the object-side surface of the lens element closest to the object side in the lens 310 is 350 mm, which is greater than -860 mm and less than 385 mm, and meets a requirement.

The focal length EFL of the lens 310 is 35.23 mm, which is greater than 33 mm and less than 38 mm, and meets a requirement. A ratio of a back focal length BFL to the focal length EFL of the lens 310 is BFL/EFL=1.076, which is greater than 0.9 and less than 1.15, and meets a requirement.

**Table 13 shows optical parameters of optical elements in the display module 300 provided in Embodiment 7.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 99.000 | 4.329 | 1.95 | 17.9 |
| | S2 | Spherical surface | -192.211 | 7.055 | | |
| L2 | S3 | Spherical surface | -30.614 | 4.365 | 1.81 | 22.7 |
| | S4 | Spherical surface | 79.796 | 1.114 | | |
| L3 | S5 | Spherical surface | Infinity | 0.501 | | |
| L4 | S6 | Spherical surface | 400.168 | 15.724 | 1.95 | 17.9 |
| | S7 | Spherical surface | 73.986 | 0.000 | | |
| L5 | S8 | Spherical surface | 73.986 | 12.606 | 1.82 | 46.6 |
| | S9 | Spherical surface | -37.667 | 0.050 | | |
| L6 | S10 | Spherical surface | 41.915 | 6.256 | 1.82 | 46.6 |
| | S11 | Spherical surface | 350.000 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 14 shows optical parameters of the lens 310 provided in Embodiment 7.**

| | | | |
|---|---|---|---|
| f1 (mm) | 68.140 | EFL (mm) | 35.23 |
| f2 (mm) | -26.456 | TTL (mm) | 90 |
| f3 (mm) | -96.240 | Fno | 1.292 |
| f4 (mm) | 31.968 | BFL (mm) | 37.948 |
| f5 (mm) | 57.355 | R1 (mm) | 99 |
| R2 (mm) | 350 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

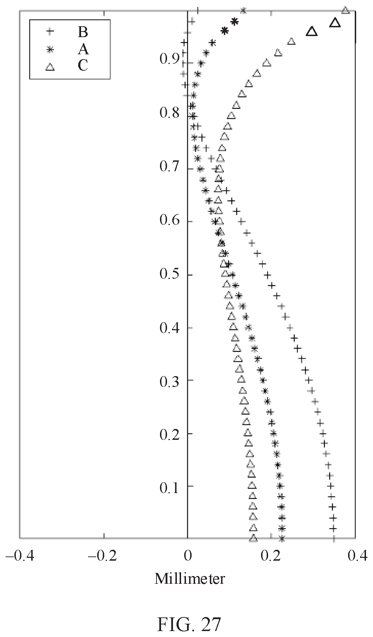

FIG. 27 is a diagram of spherical chromatic aberration of the lens 310 in FIG. 26. In FIG. 27, a vertical coordinate represents a normalized pupil coordinate, and a horizontal coordinate represents an axial aberration in a unit of millimeter. In addition, in FIG. 27, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 27 that, in this embodiment, the axial aberration is controlled within an excessively small range and is well corrected.

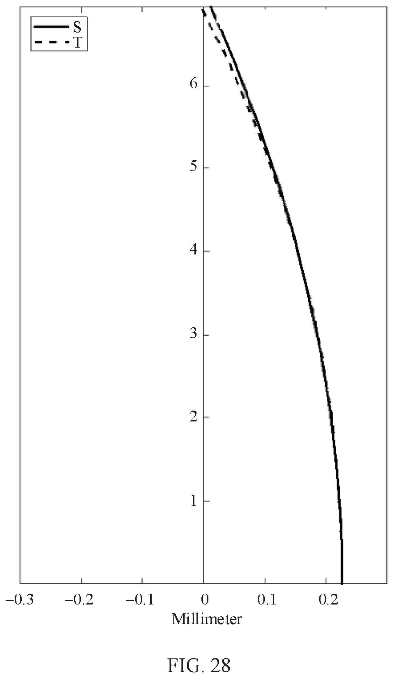

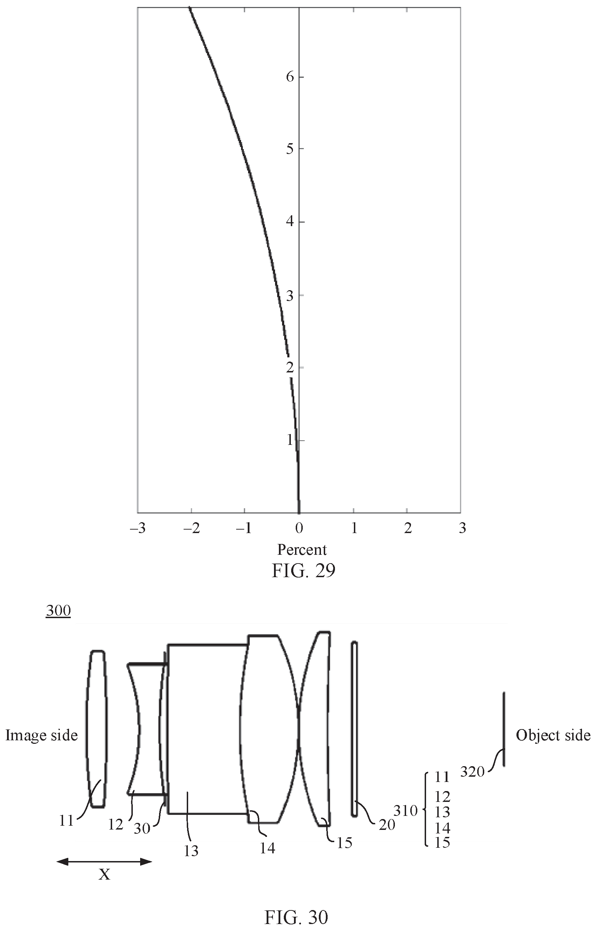

FIG. 28 is a diagram of astigmatism and field curvature of the lens 310 in FIG. 26, and FIG. 29 is a diagram of distortion of the lens 310 in FIG. 26. In FIG. 28, S represents field curvature values of light with a wavelength of 525 nm on a tangential image surface, and T represents field curvature values of the light with the wavelength of 525 nm on a sagittal image surface. In FIG. 29, a solid line represents distortion values of the light with a center wavelength of 525 nm that passes through the lens 310 in this embodiment. In this embodiment, with reference to FIG. 28 and FIG. 29, it can be learned that the lens 310 provided in this embodiment controls the field curvature and the distortion within corresponding ranges, so that a use requirement can be met.

### Embodiment 8:

FIG. 30 is a diagram of a structure of an eighth display module 300 according to an embodiment of this application. Refer to FIG. 30. The display module 300 provided in Embodiment 8 includes a lens 310, a diaphragm 30, cover glass 20, and a projection chip 320. The cover glass 20 is disposed between the projection chip 320 and the lens 310. In an optical axis direction from an image side to an object side, the lens 310 includes a first lens element 11, a second lens element 12, a third lens element 13, a fourth lens element 14, and a fifth lens element 15. The first lens element 11 is closest to the image side, the fifth lens element 15 is closest to the object side, and the diaphragm 30 is disposed between the second lens element 12 and the third lens element 13.

The first lens element 11 has positive focal power, and a ratio of a focal length f1 of the first lens element 11 to a focal length EFL of the lens 310 is |f1/EFL|=1.910. The second lens element 12 has negative focal power, and a ratio of a focal length f2 of the second lens element 12 to the focal length EFL of the lens 310 is |f2/EFL|=0.684. The third lens element 13 has negative focal power, and a ratio of a focal length f3 of the third lens element 13 to the focal length EFL of the lens 310 is |f3/EFL|=4. The fourth lens element 14 has positive focal power, and a ratio of a focal length f4 of the fourth lens element 14 to the focal length EFL of the lens 310 is |f4/EFL|=0.9355. The fifth lens element 15 has positive focal power, and a ratio of a focal length f5 of the fifth lens element 15 to the focal length EFL of the lens 310 is |f5/EFL|=1.6924.

A ratio of a curvature radius of an image-side surface of a lens element closest to an image side in the lens 310 to the focal length of the lens 310 is R1/EFL=2.892, which is greater than 1.7 and less than 5.72, and meets a requirement. The curvature radius of the image-side surface of the lens element closest to the image side in the lens 310 is 99 mm, which is greater than 64.5 mm and less than 200 mm, and meets a requirement.

A ratio of a curvature radius of an object-side surface of a lens element closest to an object side in the lens 310 to the focal length of the lens 310 is R2/EFL=11.0986, which is greater than -23 and less than 11.2, and meets a requirement. The curvature radius R2 of the object-side surface of the lens element closest to the object side in the lens 310 is 380 mm, which is greater than -860 mm and less than 385 mm, and meets a requirement.

The focal length EFL of the lens 310 is 34.239 mm, which is greater than 33 mm and less than 38 mm, and meets a requirement. A ratio of a back focal length BFL to the focal length EFL of the lens 310 is BFL/EFL=1.083, which is greater than 0.9 and less than 1.15, and meets a requirement.

**Table 15 shows optical parameters of optical elements in the display module 300 provided in Embodiment 8.**

| | Surface number | Surface type | R (mm) | Th (mm) | Nd | Vd |
|---|---|---|---|---|---|---|
| | OBJ | Spherical surface | Infinity | 10000 | | |
| L1 | S1 | Spherical surface | 99.000 | 4.354 | 1.95 | 17.9 |
| | S2 | Spherical surface | -170.765 | 6.721 | | |
| L2 | S3 | Spherical surface | -29.088 | 4.941 | 1.81 | 22.7 |
| | S4 | Spherical surface | 61.242 | 1.429 | | |
| L3 | S5 | Spherical surface | Infinity | 0.050 | | |
| L4 | S6 | Spherical surface | 333.832 | 18.001 | 1.95 | 17.9 |
| | S7 | Spherical surface | 92.234 | 0.500 | | |
| L5 | S8 | Spherical surface | 92.234 | 8.975 | 1.82 | 46.6 |
| | S9 | Spherical surface | -35.270 | 0.050 | | |
| L6 | S10 | Spherical surface | 42.709 | 6.980 | 1.82 | 46.6 |
| | S11 | Spherical surface | 380.000 | 5.142 | | |
| L7 | S12 | Spherical surface | Infinity | 1.100 | 1.523 | 58.6 |
| | S13 | Spherical surface | Infinity | 31.758 | | |
| | ImgH | Spherical surface | Infinity | 0 | | |

L1 is the first lens element 11, L2 is the second lens element 12, L3 is the diaphragm 30, L4 is the third lens element 13, L5 is the fourth lens element 14, L6 is the fifth lens element 15, L7 is the glass cover, OBJ is a projection surface (object surface), and ImgH is an image surface.

R indicates a curvature radius of the optical element (for example, the lens element or the glass cover) at a corresponding position on an optical axis.

Th indicates a surface thickness of the optical element in the optical axis direction.

Nd indicates a refractive index of each optical element irradiated by a d-line.

Vd indicates an Abbe number of the optical element.

**Table 16 shows optical parameters of the lens 310 provided in Embodiment 8.**

| | | | |
|---|---|---|---|
| f1 (mm) | 65.391 | EFL (mm) | 34.239 |
| f2 (mm) | -23.424 | TTL (mm) | 90 |
| f3 (mm) | -136.942 | Fno | 1.295 |
| f4 (mm) | 32.030 | BFL (mm) | 37.948 |
| f5 (mm) | 57.946 | R1 (mm) | 99 |
| R2 (mm) | 380 | FOV (°) | 22.3 |

EFL indicates the focal length of the lens 310, FOV indicates a maximum field of view of the lens 310, Fno indicates an aperture of the lens 310, BFL indicates the back focal length of the lens 310, R1 indicates the curvature radius of the image-side surface of the lens element closest to the image side in the lens 310, R2 indicates the curvature radius of the object-side surface of the lens element closest to the object side in the lens 310, f1 indicates the focal length of the first lens element 11, f2 indicates the focal length of the second lens element 12, f3 indicates the focal length of the third lens element 13, f4 indicates the focal length of the fourth lens element 14, and f5 indicates the focal length of the fifth lens element 15.

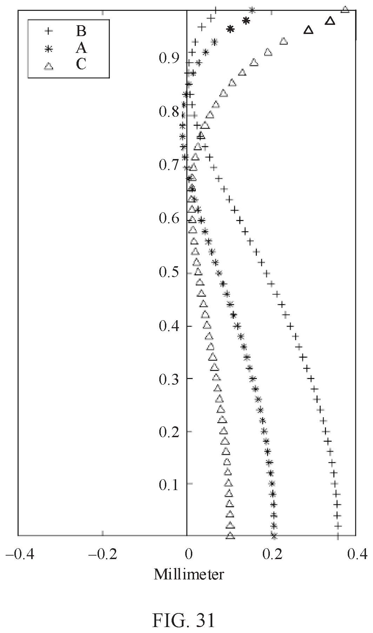

FIG. 31 is a diagram of spherical chromatic aberration of the lens 310 in FIG. 30. In FIG. 31, a vertical coordinate represents a normalized pupil coordinate, and a horizontal coordinate represents an axial aberration in a unit of millimeter. In addition, in FIG. 31, A corresponds to an axial aberration curve of light with a wavelength of 525 nm that passes through the lens 310 in this embodiment, B corresponds to an axial aberration curve of light with a wavelength of 617 nm that passes through the lens 310 in this embodiment, and C corresponds to an axial aberration curve of light with a wavelength of 460 nm that passes through the lens 310 in this embodiment. It can be seen from FIG. 31 that, in this embodiment, the axial aberration is controlled within an excessively small range and is well corrected.

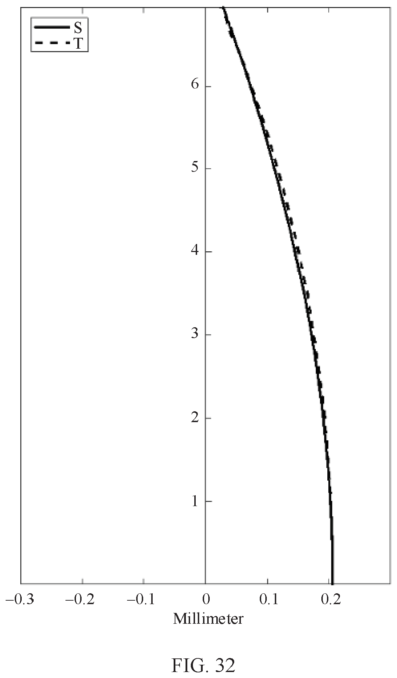

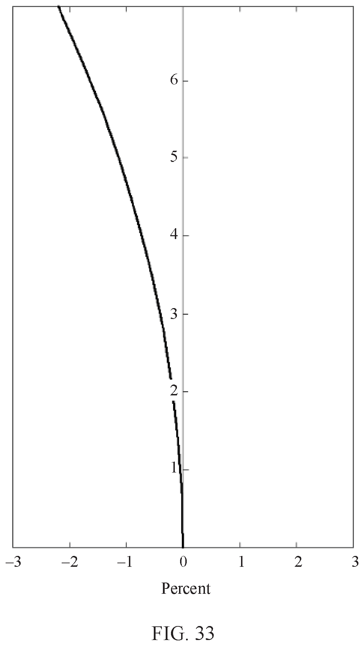

FIG. 32 is a diagram of astigmatism and field curvature of the lens 310 in FIG. 30, and FIG. 33 is a diagram of distortion of the lens 310 in FIG. 30. In FIG. 32, S represents field curvature values of light with a wavelength of 525 nm on a tangential image surface, and T represents field curvature values of the light with the wavelength of 525 nm on a sagittal image surface. In FIG. 33, a solid line represents distortion values of the light with a center wavelength of 525 nm that passes through the lens 310 in this embodiment. In this embodiment, with reference to FIG. 32 and FIG. 33, it can be learned that the lens 310 provided in this embodiment controls the field curvature and the distortion within corresponding ranges, so that a use requirement can be met.

In descriptions of embodiments of this application, it should be noted that, unless otherwise explicitly stipulated and restricted, the terms "mount", "interconnect", and "connect" should be understood in a broad sense. For example, a connection may be a fixed connection, or may be an indirect connection through an intermediate medium, or may be an internal communication between two components, or may be an interaction relationship between two components. Persons of ordinary skill in the art may understand specific meanings of the foregoing terms in embodiments of this application based on specific cases.

In the specification, claims, and accompanying drawings of embodiments of this application, the terms "first", "second", "third", "fourth", and the like (if existent) are intended to distinguish between similar objects but do not necessarily indicate a specific order or sequence.

## Claims

1. A lens, comprising at least five lens elements arranged in an optical axis direction from an image side to an object side, wherein
at least three of the at least five lens elements have positive focal power, and at least one of the at least five lens elements has negative focal power, wherein
when there is one lens element having negative focal power in the lens, the lens element having negative focal power is disposed, in the optical axis direction, between the lens element closest to the image side in the lens and the lens element closest to the object side in the lens.

2. The lens according to claim 1, wherein the lens satisfies a relational expression: 33 mm<EFL<38 mm, wherein EFL indicates a focal length of the lens.

3. The lens according to claim 1 or 2, wherein the lens satisfies a relational expression: 1.7<R1/EFL<5.72, wherein R1 indicates a curvature radius of an image-side surface of the lens element closest to the image side in the optical axis direction in the lens.

4. The lens according to any one of claims 1 to 3, wherein the lens satisfies a relational expression: 64.5 mm<R1<200 mm, wherein R1 indicates the curvature radius of the image-side surface of the lens element closest to the image side in the optical axis direction in the lens.

5. The lens according to any one of claims 1 to 4, wherein the lens satisfies a relational expression: -23<R2/EFL<11.2, wherein R2 indicates a curvature radius of an object-side surface of the lens element closest to the object side in the optical axis direction in the lens.

6. The lens according to any one of claims 1 to 5, wherein the lens satisfies a relational expression: -860 mm<R2<385 mm, wherein R2 indicates the curvature radius of the object-side surface of the lens element closest to the object side in the optical axis direction in the lens.

7. The lens according to any one of claims 1 to 6, wherein the lens satisfies a relational expression: 0.9<BFL/EFL<1.15, wherein BFL indicates a back focal length of the lens.

8. The lens according to any one of claims 1 to 7, wherein the lens element closest to the image side in the lens has positive focal power in the optical axis direction.

9. The lens according to any one of claims 1 to 8, wherein the lens element closest to the object side in the lens has positive focal power in the optical axis direction.

10. The lens according to any one of claims 1 to 9, wherein at least one lens element is a spherical lens element.

11. A display module, comprising a projection chip and the lens according to any one of claims 1 to 10.

12. A vehicle light apparatus, comprising a light source and the display module according to claim 11.

13. An electronic device, comprising the display module according to claim 11.

14. A transportation means, comprising the display module according to claim 11 or the vehicle light apparatus according to claim 12.
